(19) Europäisches Patentamt
European Patent Office
Office européen des brevets

(11) **EP 2 523 360 A1**

(12) **EUROPEAN PATENT APPLICATION**

(43) Date of publication:
**14.11.2012 Bulletin 2012/46**

(51) Int Cl.:
*H04B 7/02* (2006.01)  *H04J 11/00* (2006.01)

(21) Application number: **11305580.0**

(22) Date of filing: **13.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Wild, Thorsten**
**70435 Stuttgart (DE)**

(74) Representative: **Wetzel, Emmanuelle**
**Alcatel Lucent**
**Intellectual Property & Corporate Standards**
**Lorenzstrasse 10**
**70435 Stuttgart (DE)**

(54) **Method for interference reduction in a radio communication system, first radio access network node, second radio access network node and mobile station thereof**

(57) The invention relates to a method for interference reduction in a radio communication system (RCS). The radio communication system (RCS) comprises a first cooperating transmission antenna system (CTA1) provided by at least two antenna arrays (AA1, AA2) and a second cooperating transmission antenna system (CTA2) provided by at least two further antenna arrays (AA3, AA4). The method comprises the steps of transmitting from the first cooperating transmission antenna system (CTA1) first radio frequency signals by a first coordinated multipoint transmission (CMT1) to a first mobile station (MS1), and adapting at the second cooperating transmission antenna system (CTA2) at least one transmit weight for a second coordinated multipoint transmission (CMT2) with second radio frequency signals (RFS2) from the second cooperating transmission antenna system (CTA2) to a second mobile station (MS2) based on a channel state of an interference channel (IC) of the second radio frequency signals between the second cooperating transmission antenna system (CTA2) and the first mobile station (MS1) providing interference to the first radio frequency signals. The invention further relates to a first radio access network node (RA-NN1), to a second radio access network node (RA-NN2) and to a mobile station (MS1, MS2) for use in the radio communication system (RCS).

FIG. 1

EP 2 523 360 A1

**Description**

**FIELD OF THE INVENTION**

The invention relates to wireless communications and, more particularly but not exclusively, to interference reduction in a radio communication system.

**BACKGROUND**

Current cellular mobile communication systems, like the 3GPP LTE system (LTE = Long-Term Evolution), rely on MIMO antenna techniques (MIMO = Multiple Input Multiple Output) in order to achieve high spectral efficiency. Furthermore, a frequency re-use of one is often applied to make full use of the available scarce system bandwidth. This leads to a strong imbalance of achievable user rates throughout the cell. Additionally, the inter-cell interference becomes the dominating limit for cellular system performance. Techniques like CoMP (CoMP = Coordinated multi-point) deal with this problem. In CoMP several distributed antenna arrays belonging to a same base station or to different base stations and covering a specific coverage area such as a radio cell or a radio sector, which is denoted as a cell in the following, are grouped to form a so-called cooperation cluster of an extended coverage area. The cooperation cluster allows for a simultaneous downlink transmission from the distributed antenna arrays located in different cells to a mobile station or for a simultaneous uplink reception at the antenna arrays for radio frequency signals transmitted in an uplink direction from the mobile station.

The extended coverage area comprises the coverage areas of all cells of the cluster. This allows forming distributed MIMO systems over the entire cooperation cluster, which is also referred to as network MIMO.

Via cooperation between the cells of the cluster, cell edge problems such as inter-cell interference between cells of the cluster can be mitigated. Classical proposed linear pre-coding approaches for downlink network MIMO result in a joint weight computation for an entire cooperation cluster. With ideal channel state information at the transmitter, this would allow to fully suppress inter-cell interference within the cluster.

However, at the edge of cooperation clusters, the mentioned algorithms are not designed to consider interference on users, belonging to neighbour clusters.

**SUMMARY**

The way of performing a coordinated multipoint transmission from a cooperation cluster to a mobile station effects interference between radio frequency signals and further effects an overall data rate in a radio communication system.

Therefore, it is an object of the invention to reduce the interference between the radio frequency signals and to increase the overall data rate in the radio communication system.

The object is achieved by a method for interference reduction in a radio communication system. The radio communication system comprises a first cooperating transmission antenna system provided by at least two antenna arrays and a second cooperating transmission antenna system provided by at least two further antenna arrays. The method comprises the steps of transmitting from the first cooperating transmission antenna system first radio frequency signals by a first coordinated multipoint transmission to a first mobile station, and adapting at the second cooperating transmission antenna system at least one transmit weight for a second coordinated multipoint transmission with second radio frequency signals from the second cooperating transmission antenna system to a second mobile station based on a channel state of an interference channel of the second radio frequency signals between the second cooperating transmission antenna system and the first mobile station providing interference to the first radio frequency signals. The first and the second cooperating transmission antenna system may be also called first and second coordinated transmission antenna system.

The object is further achieved by a first radio access network node, by a second radio access network node and by a mobile station for use in the radio communication system.

The method according to the present invention offers a benefit of reducing not only interference on radio frequency signals transmitted from a cooperating transmission antenna system to mobile stations within a specific cooperation cluster but also interference on further radio frequency signals transmitted from a further cooperating transmission antenna system to further mobile stations located at a border area between a further neighbour cooperation cluster and the specific cooperation cluster while radio access network nodes responsible for the cooperation clusters may independently perform scheduling decisions for radio frequency signals to be transmitted from the cooperating transmission antenna system or the further cooperating transmission antenna system.

The method offers a further benefit of increasing an overall data rate in the radio communication system because the need and the probability for retransmissions to mobile stations located at the border area between cooperation clusters can be also reduced due to reduced interference. Additionally, due to the reduction in interference, a link adaptation can potentially select higher modulation and coding schemes, further increasing the data rates in the system.

According to a preferred embodiment, the adaptation step may be further based on at least one radio access resource parameter for the first coordinated multipoint transmission. This provides an advantage of adapting the second coordinated multipoint transmission in a long term to the radio access resource parameter such as a frequency subcarrier range applied for a longer time for the first coordinated multipoint transmission. This allows considering the at least one radio access resource for the adaptation of the at least one transmit weight for reducing inter cluster i nterference.

This can be done for example by monitoring at the second cooperating transmission antenna system a transmission of radio frequency signals from the first cooperating transmission antenna system within a specific frequency sub-range and by adapting the transmission at the second cooperating transmission antenna system in such a way, that another frequency sub-range is used predominantly at the second cooperating transmission antenna system. Furthermore, this embodiment does not require to signal an indication of the at least one radio access resource parameter from a network node of the first cooperating transmission antenna system to a network node of the second cooperating transmission antenna system.

In a further preferred embodiment, the first cooperating transmission antenna system is assigned to a first cooperation cluster and the second cooperating transmission antenna system is assigned to a second cooperation cluster and the method further comprises the steps of determining by the first cooperation cluster the at least one radio access resource parameter, and transmitting from the first cooperation cluster to the second cooperation cluster for example via a backhaul connection information of said at least one radio access resource parameter. This provides an advantage of adapting the second coordinated multipoint transmission in a short term to the radio access resource parameter such as a time slot, a frequency subcarrier block or a spreading code currently applied for the first coordinated multipoint transmission. Thereby, the second cooperating transmission antenna system is able to adapt its transmission to the second mobile station not only on a long term for reducing the interference towards the first mobile station located in the neighbor cooperation cluster but also in a short term to a varying assignment of radio access resources to the first mobile station in successive time slots. This increases the flexibility at the second cooperating transmission antenna system to reduce the interference towards further mobile stations located in the neighbor cooperation cluster in other time slots or in other frequency ranges currently not used for scheduling the first mobile station.

Furthermore, a complexity at a cooperating receive antenna system of the second cooperation cluster can be reduced and a probability for incorrectly detected first radio frequency signals can be eliminated.

In an even further preferred embodiment, the first cooperation cluster and the second cooperation cluster are temporally synchronized and the first cooperation cluster transmits the information of the at least one radio access resource parameter a predefined time before performing the adaptation step at the second cooperation cluster. This provides an advantage of adapting the second coordinated multipoint transmission in parallel to the radio access resource parameter to be applied for example in a next time slot for the first coordinated multipoint transmission. Thereby, the probability for generating any interference power to the first radio frequency signals can be reduced in advance.

In an alternative embodiment, the method further comprises the step of measuring the channel state at the second cooperation cluster. In a further alternative embodiment, the method further comprises the steps of measuring at the first mobile station the information of the channel state for example by estimating a downlink radio channel between the second cooperating transmission antenna system and the mobile station based on downlink training / pilot symbols or downlink data symbols, transmitting from the first mobile station to the first cooperation cluster the information of the channel state and transmitting from the first cooperation cluster to the second cooperation cluster the information of the channel state. The first alternative allows to apply the method for example to an FDD scenario (FDD = Frequency Division Duplex), when the cooperating transmission antenna systems apply for the downlink to the mobile stations a downlink frequency range for the downlink radio frequency signals and when for the uplink from the mobile stations to the cooperating transmission antenna systems an uplink frequency range separated from the downlink frequency range for the uplink radio frequency signals is applied. The second alternative allows to apply the method for a TDD scenario (TDD = Time Division Duplex), when a same frequency range is applied for the downlink and the uplink and a calibration of an RF chain (RF = radio frequency) is performed in order to create uplink-downlink reciprocity such as described in M. Guillaud, D. Slock, and R. Knopp, "A Practical Method for Wireless Channel Reciprocity Exploitation Through Relative Calibration," ISSPA '05, Sydney, Australia, 2005.

According to a preferred embodiment, the method further comprises the steps of comparing the channel state of the interference channel with at least two predefined channel states, and selecting one of the at least two predefined channel states with a best match to the measured channel state and wherein the information of the channel state comprises an identification for the one of the at least two predefined channel states with the best match. Such preferred embodiment allows reducing a signaling of channel state information via a radio link between the first mobile station and a network node of the first cooperation cluster or the second cooperation cluster and/or reducing the signaling of the channel state information via a backhaul link between network nodes of the first cooperation cluster and the second cooperation cluster.

In further preferred embodiments, the information of the channel state comprises information for at least two spatial parameters of the interference channel such as a combination of an absolute value and a phase value, a channel vector or a channel matrix. This provides the advantage to determine channel coefficients of the interference channel between the second cooperating transmission antenna system and the first mobile station and to reduce radiated power at the second cooperating transmission antenna system primarily for this interference channel.

In an even further preferred embodiment, the method may further comprise the step of estimating at the first mobile station a location of the first mobile station within a first coverage area of the first cooperation cluster and wherein the channel state of the interference channel is measured by the first mobile station, if the location of the first mobile station is identified at an edge between the first coverage area and a second coverage area of the second cooperation cluster. An absolute location at the edge between the first coverage area and the second coverage area may be determined for example by a GPS receiver and wherein the first mobile station comprises the GPS receiver. Alternatively, the location at the edge between the first coverage area and the second coverage area may be only estimated from received signal strengths obtained from handover measurements with respect to cells of the first and the second cooperation cluster.

This provides the benefit of performing the measuring step at the first mobile station and of applying the adaptation step at the second cooperating transmission antenna system only if the first mobile station is located in a limited area at the edge between the first coverage area and the second coverage area. Thereby, the second coordinated multipoint transmission is only affected, when a need - the first mobile station comes close to the edge - exists.

Preferably, the identifying comprises the sub-steps of comparing first average signals powers levels received from the first cooperation cluster with second average signals powers levels received from the second cooperation cluster and estimating the location of the first mobile station at the edge, if a difference between the first average signals powers levels and the second average signals powers levels reaches a threshold. This provides the advantage of further limiting an effect on the second coordinated multipoint transmission to the cases, where the first mobile station is close to the edge and where the interference from the second radio frequency signals reaches or exceeds a specific threshold.

In another embodiment, the method comprises the steps of transmitting a request from the second cooperation cluster to the first cooperation cluster for requesting a transmission of uplink sounding signals such as uplink pilots at the first mobile station, forwarding the request from the first cooperation cluster to the first mobile station, transmitting the uplink sounding signals from the first mobile station, and measuring at the second cooperation cluster the uplink sounding signals received via the interference channel. This provides the benefit of being able to measure a channel state of the interference channel directly at the second combined receive antenna system of the second cooperation cluster with no need for signaling channel state information from the first mobile station to the first cooperation cluster and from the first cooperation cluster to the second cooperation cluster. This embodiment is required for FDD scenarios and may be used in addition to measuring the channel state of the interference channel in a downlink direction for TDD scenarios.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram of a radio communication network with two radio access network nodes and two mobile stations.
Figure 2 shows schematically a flow diagram of a method in accordance to a first embodiment.
Figure 3 shows schematically a block diagram of a transceiver of a radio access network node and a transceiver of a mobile station.
Figure 4 shows schematically a flow diagram of a method in accordance to a second embodiment.
Figure 5 shows schematically a block diagram of a radio access network node according to the embodiments of the invention.
Figure 6 shows schematically a block diagram of a mobile station according to the embodiments of the invention.

## DESCRIPTION OF THE EMBODIMENTS

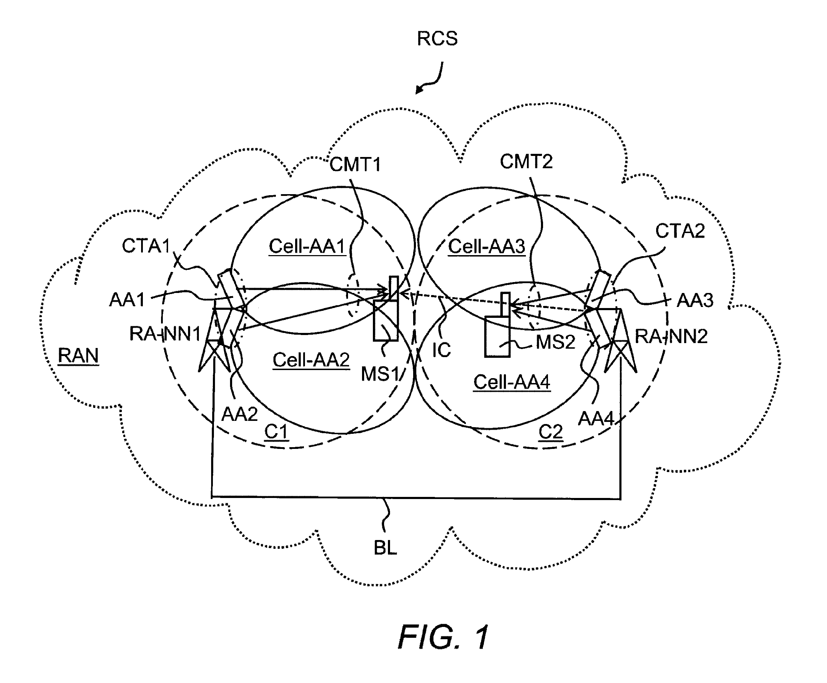

Figure 1 shows a radio communication system RCS comprising a radio access network RAN. The core network of the radio communication system RCS and connections of the radio communication system RCS to further radio communication systems, to the Internet or to fixed line communications systems are not shown for simplification.

The radio communication system RCS may be for example a 3GPP LTE radio communication network using OFDM (OFDM = Orthogonal Frequency Division Multiplexing). In further alternatives, the radio communication system RCS may for example a 3GPP UMTS/HSPA radio communication network (UMTS = Universal Mobile Telecommunication Systems, HSPA = High Speed Packet Access), a WiMAX radio communication network (WiMAX = Worldwide Interoperability for Microwave Access) based for example on the IEEE 802.16d standard (IEEE = Institute of Electrical and Electronics Engineers), or a WLAN (WLAN = Wireless Local Area Network) based for example on the IEEE 802.11 g standard.

The radio access network RAN comprises a first radio access network node RA-NN1, a second radio access network node RA-NN2 and a backhaul link BL such as an optical fibre, a coaxial cable or a directional radio link between the first radio access network node RA-NN1 and the second radio access network node RA-NN2. The backhaul link BL may be for example an X2 interface as used in 3GPP LTE or 3GPP LTE-Advanced.

The term "radio access network node" may be considered synonymous to and/or referred to as a base transceiver station, base station, Node B, enhanced Node B, access point etc. and may describe radio access equipment that provides connectivity via a radio link between the radio communication system RCS and one or more mobile stations.

Further radio access network nodes and further backhaul links between the radio access network nodes are not shown for simplification.

The first radio access network node RA-NN1 comprises a first antenna array AA1 and a second antenna array AA2. The first and the second antenna array AA1, AA2 are configured to provide a first cooperating transmission antenna system CTA1 for a simultaneous first coordinated multipoint transmission CMT1 of first radio frequency signals from the first cooperating transmission antenna system CTA1 to a first mobile station MS1.

The second first radio access network node RA-NN2 comprises a third antenna array AA3 and a fourth antenna array AA4. The third and the fourth antenna array AA3, AA4 are configured to provide a second cooperating transmission antenna system CTA2 for a simultaneous second coordinated multipoint transmission CMT2 of second radio frequency signals from the second cooperating transmission antenna system CTA2 to a second mobile station MS2.

The first, second, third and fourth antenna array AA1, AA2, AA3, AA4 may be for example passive antenna arrays (without a power amplifier) on top of an antenna mast as shown in Figure 1. Alternatively, the first, second, third and fourth antenna array AA1, AA2, AA3, AA4 may be radio remote heads with one or several power amplifier stages and connected to the first radio access network nodes RA-NN1, RA-NN2 via fibre optic cables using the CPR1 interface protocol (CPRI = Common Public Radio interface).

In further alternatives, the first and the second radio access network node RA-NN1, RA-NN2 may comprise a single antenna array or more than two antenna arrays. If the radio access network nodes only comprise a single antenna array, at least two of the radio access network nodes are configured to provide a cooperating transmission antenna system and preferably one of the at least two of the radio access network nodes is appointed as a master and the other radio access network nodes are appointed as slaves. The master makes scheduling decisions, coordinates the coordinated multipoint transmissions within the cooperation cluster and forwards downlink data and associated control information to the slaves. The slaves receive the downlink data and execute the scheduling decisions for providing cooperated multi transmissions for the downlink data.

The first antenna array AA1 provides coverage for a first radio cell Cell-AA1. The second, third and fourth antenna array AA1 provide coverage for a second, third and fourth radio cell Cell-AA2, Cell-AA3, Cell-AA4 accordingly. The term "radio cell" may be considered synonymous to and/or referred to as radio cell, cell, radio sector, sector etc.

The first and the second radio cell Cell-AA1, Cell-AA2 are assigned to a first cooperation cluster C1 and the third and the fourth radio cell Cell-AA3, Cell-AA4 are assigned to a second cooperation cluster C2.

In further alternatives, three or more radio cells are assigned to the first and the second cooperation cluster C1, C2.

The first mobile station MS1 may be located within an overall coverage area of the first cooperation cluster C1 provided by an aggregation of coverage areas of the first and the second radio cell Cell-AA1, Cell-AA2 and may be served by the first and the second radio cell Cell-AA1, Cell-AA2 of the first cooperation cluster C1.

More specifically, the first mobile station MS1 may be located within an overlap region of the coverage areas of the first and the second radio cell Cell-AA1, Cell-AA2 at an edge between the overall coverage area of the first cooperation cluster C1 and an overall coverage area of the second cooperation cluster C2 provided by an aggregation of coverage areas of the third and the fourth radio cell Cell-AA3, Cell-AA4.

The second mobile station MS2 may be located within the overall coverage area of the second cooperation cluster C2 and more specifically within an overlap region of the coverage areas of the third and the fourth radio cell Cell-AA3, Cell-AA4.

The first mobile station MS1 may comprise a single antenna or an antenna array with two or more antenna elements. The second mobile station MS2 may comprise a single antenna or an antenna array with two or more antenna elements.

The term "mobile station" may be considered synonymous to, and may hereafter be occasionally referred to, as a mobile unit, mobile station, mobile user, access terminal, user equipment, subscriber, user, remote station etc. The mobile station MS may be for example a cellular telephone, a portable computer, a pocket computer, a hand-held computer, a personal digital assistant or a car-mounted mobile device.

Further mobile stations are not shown in Figure 1 for simplification.

When the second radio access network node RA-NN2 transmits the second radio frequency signals by the second coordinated multipoint transmission CMT2 to the second mobile station MS2, second radio frequency signals may be also received at the first mobile station MS1 via an interference channel IC between the second cooperating transmission antenna system CTA2 and the first mobile station MS1.

When the first radio access network node RA-NN1 transmits the first radio frequency signals by the first coordinated multipoint transmission CMT1 to the first mobile station MS1, the first radio frequency signals may be interfered by the second radio frequency signals and may therefore degrade a reception quality of the first radio frequency signals at the first mobile station MS1.

For reducing this interference effect, the second radio access network node RA-NN2 is able to adapt one or several transmit weights at one or both of the antenna arrays AA3, AA4 of the second cooperating transmission antenna system CTA2 for the second coordinated multipoint transmission CMT2. Thereby, a radiation of signal power in the direction towards the first mobile station MS1 can be reduced. At a same time, a reception quality of the second radio frequency signals at the second mobile station MS2 should be maintained or at least only slightly reduced.

The term "transmit weight" may be considered synonymous to, and may hereafter be occasionally referred to, as an antenna weight, beamforming weight, precoder, precoding weight, transmit precoder, etc.

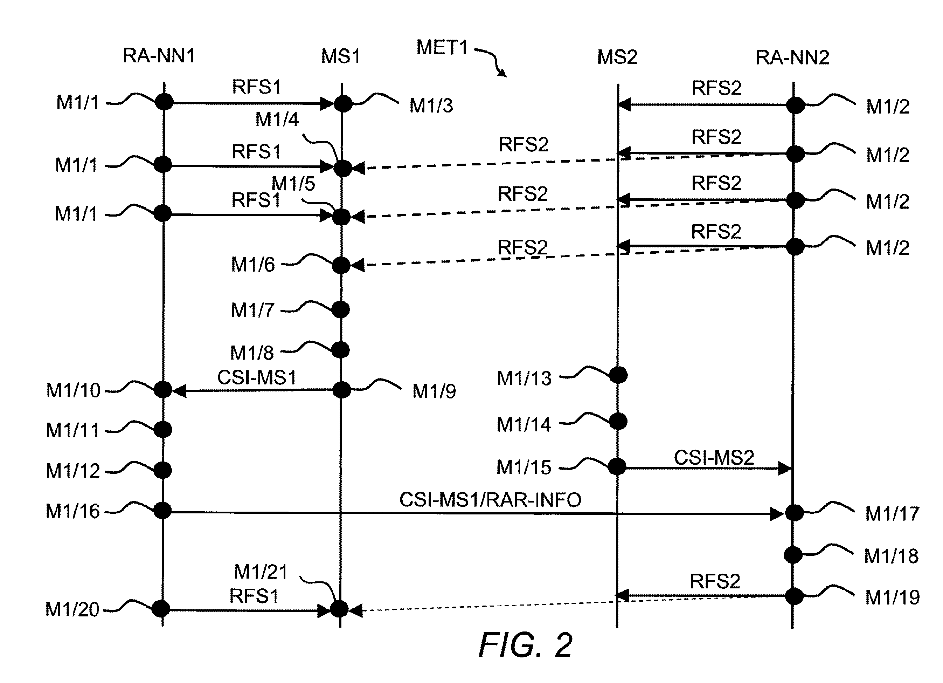

The adaptation may be based on a channel state of the interference channel IC. Preferably, the adaptation may also take into account one or several radio access resource parameters of the first coordinated multipoint transmission CMT1 such as a spreading code in case of UMTS/WCDMA (WCDMA = Wideband - Code Division Multiple Access) or a time slot such as a TTI (TTI = Transmission Time Interval), a subframe or a set of subframes in case of TDD and such as applied in LTE/OFDMA (OFDMA = Orthogonal Frequency Division Multiple Access) or a subcarrier range and a time slot in case of FDD and such as applied in LTE/OFDMA. More details about the adaptation will be given according to Figure 2.

Referring to Figure 2 a flow diagram of a method MET1 in accordance to several alternative embodiments is shown. The number of the steps for performing the method MET1 is not critical, and as can be understood by those skilled in the art, that the number of the steps and the order of the steps may vary without departing from the scope of the invention. Also some of the steps may be executed at a same time, e.g. steps M1/11 and M1/13 and/or steps M1/12 and M1/14.

The method MET1 is shown with respect to the network nodes shown in Figure 1.

In a first step M1/1, the first radio access network node RA-NN1 may transmit for example in several sequent PRBs (PRB = physical resource block) such as applied in 3GPP LTE the first radio frequency signals RFS1 comprising first linear precoded data via the first cooperating transmission antenna system CTA1 by the first coordinated multipoint transmission CMT1 to the first mobile station MS1. In case of a 3GPP LTE the first radio frequency signals RFS1 for the first mobile station MS1 are allocated for each PRB a TTI (TTI = transmission time interval) and a frequency sub-range with a group of 12 adjacent OFDM subcarriers and a sub-carrier spacing of 15 kHz. The TTI of a time length of 1 ms is part of a radio frame of a time length of 10 ms. The frequency sub-range of 180 kHz is part of an allocated bandwidth of for example 5 MHz. A time position within the radio frame of the PRB and a frequency location within the allocated bandwidth of the PRB may vary in successive radio frames for the first coordinated multipoint transmission CMT1 to the first mobile station MS1. The PRB is the so-called radio access resource parameter for the first coordinated multipoint transmission CMT1 in case of 3GPP LTE. By using other transmission techniques for the first coordinated multipoint transmission CMT1 the radio access resource parameter may characterized by a single parameter such as a spreading code such as applied in UMTS, a time slot (if for example a full allocated bandwidth is permanently used for the first mobile station) and/or a subcarrier range (if for example all TTIs of a radio frame are permanently used for the first mobile station).

All available positions of PRBs within the radio frame and within the allocated bandwidth can be identified by a sub-frame number and a sub-carrier group number.

The first radio frequency signals RFS1 may carry for example IP packets (IP = Internet Protocol) of a video download from a video server in the Internet such as Youtube.com to the first mobile station MS1. Uplink radio signals from the first mobile station MS1 to the first radio access network node RA-NN 1 are not shown in Figure 1 for simplification.

In a second step M1/2 and at same time intervals, the second radio access network node RA-NN2 may transmit in several sequent PRBs the second radio frequency signals RFS2 comprising second linear precoded data via the second cooperating transmission antenna system CTA2 by the second coordinated multipoint transmission CMT2 to the second mobile station MS2.

The second radio frequency signals RFS2 may carry for example IP packets of a VoIP call (VoIP = Voice over IP) from a calling party to the second mobile station MS2. Uplink radio signals from the second mobile station MS2 to second radio access network node RA-NN2 are not shown in Figure 2 for simplification.

The first mobile station MS1 may receive initially at next step M1/3 only the first radio frequency signals RFS1 because the first mobile station MS1 may be located in a centre of the overall coverage area of the first cooperation cluster C1 and thus the second radio frequency signals RFS2 are very much attenuated at the initial location of the first mobile station MS1.

Then, the first mobile station MS1 may move towards the edge between the overall coverage areas of the first and the second cooperation cluster C1, C2.

At a next step M1/4, the first mobile station MS1 may receive the first radio frequency signals RFS1 and additionally with increasing considerable power also the second radio frequency signals RFS2. The reception of the second radio frequency signals RFS2 are an indication, that the first mobile station MS1 has become a victim for interference signals from the neighbour second cooperation cluster C2.

In a further optional step M1/5, the first mobile station MS1 may preferably estimate a location of the first mobile station MS1 within a coverage area of the first cooperation cluster C1 and wherein the location may be given by an overall coverage area of a set of radio cells observed with receive powers within a certain reception power range. Such an estimation may be done for example by comparing first averaged power levels $ARSPL1$ of first and second pilots received from the first and the second radio cell Cell-AA1, Cell-AA2 of the first cooperation cluster C1 with second averaged power levels $ARSPL2$ of third and fourth pilots received from the third and the fourth radio cell Cell-AA3, Cell-AA4 of the neighbour second cooperation cluster C2. Depending on a difference between the first and the second averaged received signal power levels $ARSPL1, ARSPL2,$ the first mobile station MS1 may assess, whether the first mobile station MS1 is located within the overall coverage of the first cooperation cluster C1 far away from the edge of the overall coverage areas of the first and the second cooperation cluster C1, C2 or the first mobile station MS1 is located near the edge of the overall coverage areas of the first and the second cooperation cluster C1, C2. The first mobile station MS1 may for example determine the location of the first mobile station MS1 near the edge of the overall coverage areas of the first and the second cooperation cluster C1, C2, if a difference between the first averaged received signal power level $ARSPL1$ and the second averaged received signal power level $ARSPL2$ reaches a predefined threshold such as that the difference is below 6 dB:

$$ARSPL1 - ARSPL2 < 6dB \qquad (1)$$

In a next step M1/6, the first mobile station MS1 measures the channel state of the interference channel IC by determining spatial parameters of the interference channel IC.

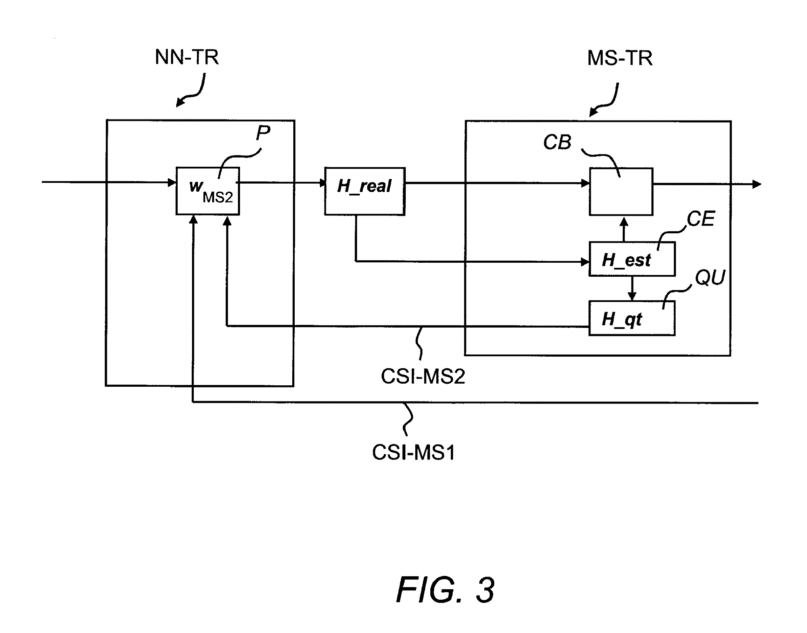

According to Figure 3, the first mobile station MS1 and the second mobile station MS2 may comprise a transceiver MS-TR. The transceiver MS-TR may comprise a combiner CB for combining the first radio frequency signals RFS1 or the second radio frequency signals received from antenna elements of an antenna array of the first or the second mobile station MS1, MS2. The transceiver MS-TR may further comprise a channel estimator processing unit CE for estimating channel coefficients H_est of a real transmission channel H_real for the first or the second coordinated multipoint transmission CMT1, CMT2.

The transceiver MS-TR may further comprise a quantization processing unit QU for quantizing the estimated channel coefficients H_est to quantizied channel state information H_qt. The estimated channel coefficients H_est may be applied to the combiner CB for recovering downlink signalling and/or downlink user data within the received first or second radio frequency signals RFS1, RFS2.

The channel estimator CE may determine for example 4 complex valued MIMO channel coefficients, representing absolute and phase of the channel, $h_{AA3\_1,1}, h_{AA3\_2,1}, h_{AA4\_1,1}, h_{AA4\_2,1}$ of a first channel vector $v_{meas}$ from the third and the fourth antenna array AA3, AA4 to the first mobile station MS1, if the third and the fourth antenna array AA3, AA4 comprises 2 antenna elements and the first mobile station MS1 comprises a single antenna:

$$v_{meas} =$$
$$\left( h\_meas_{AA3\_1,1}, h\_meas_{AA3\_2,1}, h\_meas_{AA4\_1,1}, h\_meas_{AA4\_2,1} \right) \qquad (2)$$

The measurement may be performed on synchronization channels and/or on pilots e.g. scattered over time and frequency within a downlink shared channel such as a DSCH (DL-SCH = Downlink Shared Channel) in LTE.

In an alternative, the first mobile station MS1 determines 2 MIMO channel coefficients for a first channel vector from the third antenna array AA3 to the first mobile station MS1, if the first radio frequency signals received at the first mobile station MS1 are predominantly interfered by the second radio frequency signals RFS2 transmitted from the third antenna array AA3. In a further alternative, the first mobile station MS1 determines 8 MIMO channel coefficients of a first channel matrix for the interference channel IC, if the third and the fourth antenna array AA3, AA4 comprise 2 antenna elements and also the first mobile station MS1 comprises an antenna array with two antenna elements.

Preferably, the first mobile station MS1 measures the channel state of the interference channel IC, only if the location of the first mobile station MS1 has been identified at the edge between the overall coverage areas of the first and the second cooperation clusters C1, C2.

In a further optional step M1/7, the quantization processing unit QU may compare for example the determined channel vector $\mathbf{v_{meas}}$ with two or more predefined channel vectors $\mathbf{v_{def,j}}$ of a set $C^{def}$ of predefined channel vectors given by following equations:

$$\mathbf{v_{def,j}} = \left( h\_def_{AA3\_1,1,j}, h\_def_{AA3\_2,1,j}, h\_def_{AA4\_1,1,j}, h\_def_{AA4\_2,1,j} \right) \quad (3)$$

Vector quantization techniques may be used in order to generate the predefined vectors or predefined matrices representing channels as elements a codebook. Exemplarily, codebooks such as defined for closed-loop linear precoding in 3GPP TS36.21 1 Release 10 may be used. Thereby, a codebook based pre-coding may be applied at the first and the second radio access network nodes RA-NN1, RA-NN2 and at the first and the second mobile station MS1, MS2.

The comparison between the determined channel vector $\mathbf{V_{meas}}$ and the predefined channel vectors $\mathbf{v_{def,j}}$ may be performed for example by calculating a minimizing Euclidean distance using following equation:

$$diff_j = \sqrt{\left| \mathbf{v_{def,j}} - \mathbf{v_{meas}} \right|^2} =$$
$$\sqrt{(h\_def_{AA3\_1,1,j} - h\_meas_{AA3\_1,1})^2 + (h\_def_{AA3\_2,1,j} - h\_meas_{AA3\_1,1})^2 +}$$
$$\overline{(h\_def_{AA4\_1,1,j} - h\_meas_{AA4\_1,1})^2 + (h\_def_{AA4\_2,1,j} - h\_meas_{AA4\_2,1})^2}$$

$$(4)$$

Alternatively, a minimum chord distance may be calculated by equation 4 as described in section "Chordal distance quantization" in Qiang Li; Georghiades, C.N.; , "Precoder Quantization for MIMO-OFDM Systems over Frequency Selective Channels," Mobile and Wireless Communications Summit, 2007. 16th IST , vol., no., pp. 1-5, 1-5 July 2007, which is hereby incorporated by reference.

In further alternatives, a vector quantization technique may be based on a minimum mean squared error quantization or a vector quantization such as described in sections "Minimum Mean Squared Error Quantization" and "Vector Quantization" in Qiang Li; Georghiades, C.N.; , "Precoder Quantization for MIMO-OFDM Systems over Frequency Selective Channels," Mobile and Wireless Communications Summit, 2007. 16th IST , vol., no., pp. 1-5, 1-5 July 2007, which are hereby also incorporated by reference.

In a next optional step M1/8, the quantization processing unit QU may select one of those predefined channel states with a best match to the measured channel state of the interference channel IC by using for example following equation:

$$v\_bestmatch = \underset{\mathbf{v_{def,j}} \in C^{def}}{\arg\min} \, diff_j \qquad (5)$$

An alternative approach to the steps M1/7 and M1/8 can be done based on T. Wild, "A rake-finger based efficient channel state information feedback compression scheme," in Proceedings of the IEEE VTC spring 2010, which is hereby incorporated by reference. Here a scalarquantization of the dominant taps of the time-domain channel impulse response is done, which removes the redundancy of the frequency domain correlation. Additionally the feedback is split into short-term and long-term components. Both effects lead to a strong compression of the required feedback rate.

In a further step M1/9, the first mobile station MS1 transmits to the first radio access network node RA-NN1 channel state information CS1-MS1 of the interference channel IC in a vector-valued format or a matrix-valued format. In doing so the first mobile station MS1 may transmit for example the 4 MIMO channel coefficients $h_{AA3\_11}, h_{AA3-2,1}, h_{AA4\_1,1}, h_{AA4\_2,1}$ of the channel vector $\mathbf{v_{meas}}$. The channel state information CS1-MS1 may be transmitted to the first antenna array AA1 or the second antenna array AA2 or in case of a cooperative multipoint reception at the first cooperation cluster C1 to both the first and the second antenna array AA1, AA2.

The information of the channel state may be also called CDI (CDI = channel direction information).

In an alternative, the first mobile station MS1 may transmit to the first radio access network node RA-NN1 an indicator as the quantizied channel state information H_qt for those predefined channel state providing a best match to the measured channel state of the interference channel IC and selected by the optional step M1/8. The indicator may be for example similar to a PMI (PMI = precoding matrix indicator) in 3GPP LTE.

The use of predefined channel vectors or predefined channel matrices and a signaling of information about the predefined channel vectors or predefined channel matrices by the channel state information CSI-MS1 is a so-called explicit feedback.

Alternatively, predefined precoding vectors may be used and information about the precoding vectors may be signaled by the channel state information CSI-MS1. This is a so-called implicit feedback. Thereby, a precoding vector is identified based on a particular metric, e.g. maximizing a throughput in the system. The second radio access network node RA-NN2, when receiving the channel state information CSI-MS1 may transform the implicit feedback into an explicit feedback to estimate the channel state of the interference channel IC.

Additionally, any other way of describing the channel state (e.g. based on analogue feedback: no quantization is applied but continuous complex valued coefficients are signalled) can be used for the method MET1. Preferably, the first mobile station MS1 further transmits to the first radio access network node RA-NN1 one or several cell IDs (ID = indicator) of the second cooperation cluster C2. A single cell ID and a single channel state information may be transmitted for example for the third radio cell Cell-AA3, if the third radio cell Cell-AA3 provides much more interference (e.g. difference of received interference powers at the first mobile station MS1 is above a predefined threshold) to the first mobile station MS1 than the fourth radio cell Cell-AA4. Two cell IDs of the third and the fourth radio cell Cell-AA3, Cell-AA4 may be transmitted, if both radio cells provide a similar interference (e.g. difference of received interference powers at the first mobile station MS1 is below the predefined threshold) to the first mobile station MS1.

In a next step M1/10, the channel state information CSI-MS1 is received at the first radio access network node RA-NN1.

In a further step M1/11, the first radio access network node RA-NN1 identifies for the channel state information CSI-MS1 received from the first mobile station MS1 a neighbor cooperation cluster and a master radio access network node controlling the neighbor cooperation cluster.

In a first alternative, the first radio access network node RA-NN1 may estimate for example a movement direction of the first mobile station MS1 towards the second cooperation cluster C2 by comparing averaged received signal powers of the first and the second radio cell Cell-AA1, Cell-AA2 currently reported from the first mobile station MS1 with averaged received signal powers of the first and the second radio cell Cell-AA1, Cell-AA2 previously reported from the first mobile station MS1. By comparing the movement direction of the first mobile station MS1 with a digital geographical map and a look up table storing neighbor radio access network nodes, the first radio access network node RA-NN1 identifies the second radio access network node RA-NN2 as the master responsible for the neighbor cooperation cluster C2.

In a second alternative, the first radio access network node RA-NN1 may simply use the cell ID related to the channel state information and reported from the first mobile station MS1 for identifying the second radio access network node RA-NN2 as the master by use of the look up table.

In a third alternative, the first radio access network node RA-NN1 may estimate a location of the first mobile station MS1 by performing a triangulation using uplink signals transmitted from the first mobile station MS1 and received at the first and the second antenna array AA1, AA2 and may identify the second radio access network node RA-NN2 as the master by use of the look up table.

In a fourth alternative, a neighbor relation may be detected based on handover measurements of the MS. Two references for building up autonomous neighbor relations may be build up for example by methods as described in D. Aziz, A. Ambrosy, L. Ho, L. Ewe, M. Gruber, H. Bakker, "Autonomous Neighbor Relation Detection and Handover Optimization in LTE", Bell Labs Technical Journal 15 (3), 63-84 (2010) and C. Mueller, L. Ewe, H. Bakker, " Evaluation of the Automatic Neighbor Relation Function in a Dense Urban Scenario", International Workshop on Self-Organizing Networks IWSON VTC2011-Spring Budapest.

In a next step M1/12, a scheduler of the first radio access network node RA-NN1 determines one or more radio access resource parameters for a next transmission of the first radio frequency signals RFS1 to the first mobile station MS1. The one or more radio access resource parameters may be for example one or several PRBs such as applied in 3GPP LTE, which are allocated to the first mobile station MS1. Preferably, the first radio access network node RA-NN1 extracts from the scheduler information of the one or more radio access resource parameters for a transmission of the information to the second radio access network node PA-NN2. The information may be for example corresponding indices of the PRBs allocated to the first mobile station MS1.

Preferably, the first and the second radio access network nodes RA-NN1, RA-NN2 and thereby the first and the second cooperation cluster C1, C2 are temporally synchronized for example by adapting clocks of the first and the second radio access network nodes ILA-NN1, RA-NN2 to time signals obtained from a first GPS receiver (GPS = Global Positioning System) or from a first GTS receiver (GTS = Global Transmission Service) of the first radio access network node RA-NN1 and from a second GPS receiver or a second GTS receiver of the second radio access network node RA-NN2 or by using the IEEE 1588 precision time protocol (optionally in conjunction with accurate local oscillators, e.g. Rubidium-based).

In a further step M1/13 (see Figure 3), the second mobile station MS2 may estimate by using the channel estimator processing unit CE second MIMO channel coefficients of the second coordinated multipoint transmission CMT2 based on the second radio frequency signals RFS2 received at the second mobile station MS 2.

In a next step M1/14, the second mobile station MS2 may quantize the second MIMO channel coefficients by using the quantization processing unit QU (see the step M1/8 above).

In a further step M1/15, the second mobile station MS2 transmits the channel state information CSI-MS2 preferably as quantized channel state information to the second radio access network node RA-NN2.

In a further step M1/16, the first radio access network node RA-NN1 transmits or forwards the channel state information CSI-MS1 of the interference channel IC to the second radio access network node RA-NN2. Preferably, the first radio access network node RA-NN1 further transmits the information of the one or more radio access resource parameters RAR-INFO to the second radio access network node RA-NN2. More preferably, the information of the one or more radio access resource parameters RAR-INFO further comprises a time stamp for the next first coordinated multipoint transmission CMT1.

The first radio access network node RA-NN1 may transmit the information of the one or more radio access resource parameters to the second radio access network node RA-NN2 a predefined time period before the next first coordinated multipoint transmission CMT1 to the first mobile station MS1 is performed.

The predefined time period $TP_{predefined}$ may be calculated for example by following equation:

$$TP_{predefined} = TT_{BL} + CT_{RA-NN2} + GT \qquad (6)$$

with

$TT_{BL}$ : an averaged transmission time from the first radio access network node RA-NN1 to the second radio access network node RA-NN2 via the backhaul link BL,

$CT_{RA\text{-}NN2}$: an average processing time for performing a transmit weight calculation for the second coordinated multipoint transmission CMT2 at the second radio access network node RA-NN2, and

$GT$ : guard time in case of congestion on the backhaul link BL or in case processing delays at the second radio access network node RA-NN2.

In an alternative, the equation (6) may not comprise the guard time summand.

In a further step M1/17, the information of the channel state of the interference channel IC and preferably the information of the one or more radio access resource parameters are received at the second radio access network node RA-NN2.

In a next step M1 /18, a precoder P of a transceiver NN-TR of the second radio access network node RA-NN2 (see Figure) adapts one or several transmit weights to be applied at the second cooperating transmission antenna system CTA2 for a next second coordinated multipoint transmission CMT2 to the second mobile station MS2 based on the channel state information CSI-MS2 received from the second mobile station MS2 and based on the channel state information CSI-MS1 of the interference channel IC received from the first radio access network node RA-NN1. The adaptation may be done by calculating at the precoder P transmit weights $\mathbf{w_{MS2}}$ for antenna elements of the third and the fourth antenna array AA3, AA4 for the next second coordinated multipoint transmission CMT2 to the second mobile station MS2 using for example the following equation:

$$\mathbf{w_{MS2}} = \underset{\mathbf{w_{MS2}}}{\arg\max} \frac{P_{MS2}}{M\sigma_n^2 + L_{\bar{S},MS2} + L_{\bar{V},MS2}} \qquad (7)$$

with:

Those per-MS transmit weights $\mathbf{W_{MS2}}$ represent a complex valued column vector with the number of rows corresponding to the number of antenna elements of the respective cooperation cluster. The transmit weights $\mathbf{w_{MS2}}$ can vary per subcarrier or set of subcarriers or multiple access resource or they can be computed for the whole frequency band. They will also vary over time.

$P_{MS2} = \|\mathbf{H_{s,MS2}w_{MS2}}\|^2$: useful signal power at an input of the combiner CB of the transceiver MS-TR of the second mobile station MS2, $H_{S,MS2}$: channel vector or channel matrix between the second cooperating transmission antenna system CTA2 and the second mobile station MS2; $H_{S,MS2}$ may be provided for example by reporting the second channel state information CSI-MS2 from the second mobile station MS2 to the second cooperation cluster C2 (see step M1/16 in Figure 2), $\|...\|$ : The 2-norm of a matrix or vector.

M : number of receive antennas at the second mobile station MS2, $\sigma_n^2$ : noise power and interference power from additional interfering clusters measured at the second mobile station MS2. Note that in case there is a high imbalance observed between different $\sigma_n^2$ for different mobile stations, it is suggested here to re-normalize all $\sigma_n^2$ to a same value, e.g. unity, and to rescale the channel coefficients per mobile station such, that a corresponding SNR value (SNR = signal to noise ratio) remains unchanged.

$$L_{\overline{S},MS2} = \sum_{\forall k \in \overline{S} \setminus \{MS2\}} \|\mathbf{H_{S,k}w_{MS2}}\|^2 :$$ summation over interference power caused to the set $\overline{S} \setminus \{MS2\}$ representing all other mobile stations located within and served by the cooperation cluster C2 on a same multiple-access resource such as a same PRB,

$\mathbf{H_{S,k}}$: channel vector or channel matrix between the second cooperating transmission antenna system CTA2 and one of the other mobile stations located within and served by the cooperation cluster C2; $\mathbf{H_{S,k}}$ may be provided for example by reporting channel state information from the one of the other mobile stations to the second cooperation cluster C2, $$L_{\overline{V},MS2} = \sum_{\forall v \in \overline{V}} \|\mathbf{H_{S,v}w_{MS2}}\|^2 :$$

summation over interference power caused to the first mobile station MS1 located in the neighbour cooperation cluster C1 over further interference power caused to further mobile stations located in the neighbour cooperation cluster C1 (not shown in Figure 1) and over even further interference power caused to even further mobile stations located in further neighbour cooperation clusters (also not shown in Figure 1), all contained in the user set $\overline{V}$ ,

$\mathbf{H_{S,v}}$: e.g. the channel vector or channel matrix between the second cooperating transmission antenna system CTA2 and the first mobile station MS1 located within and served by the first cooperation cluster C1; $\mathbf{H_{S,v}}$ may be provided for example by reporting the first channel state information CSI-MS1 from the first mobile station MS1 via the first radio access network node RA-NN1 to the second radio access network node RA-NN2 of the second cooperation cluster C2.

The equation (7) follows along the principles of a leakage-based precoding scheme as discussed by M. Sadek et al. "A leakage-based precoding scheme for downlink multi-user MIMO channels", Wireless Communications, IEEE Transactions on Wireless Communications, vol. 6, no. 5, pp. 1711-1721, May 2007 and which is hereby incorporated by reference. The leackage aware precoding scheme optimizes a set of transmit weights $\mathbf{w_{MS2}}$ in order to maximize an SLNR (SLNR = signal-to-leakage-plus-noise-ratio). The equation (7) can be solved as a generalized Eigenvalue problem in closed-form solution, as done in the directly above-cited paper for multi-user MIMO scenarios.

The transmit weights $\mathbf{w_{MS2}}$ are preferably repeatedly calculated for one PRB or several PRBs. Thereby, the information of the one or more radio access resource parameters RAR-INFO to be applied for the next first coordinated multipoint transmission CMT1 is considered for example in a following way:

The information of the one or more radio access resource parameters RAR-INFO tells the second radio access network node RA-NN2, that a PRB of 12 OFM subcarriers with 15 kHz OFDM subcarrier spacing and a first frequency range from 2110.00 MHz to 2110.18 MHz will be applied at a defined subframe index for the next first coordinated multipoint transmission CMT1 to the first mobile station MS1.

If the second cooperation cluster C2 will apply for the next second coordinated multipoint transmission CMT2 to the second mobile station MS2 the same time period and the same PRB with the same frequency range from 2110.00 MHz to 2110.18 MHz, the second radio access network node RA-NN2 will apply the equation (7) for calculating the transmit weights **w$_{MS2}$**.

If the second cooperation cluster C2 will apply for the next second coordinated multipoint transmission CMT2 to the second mobile station MS2 a time period while no first coordinated multipoint transmission CMT1 to the first mobile station MS1 will take place and/or a PRB with a different frequency range such as from 2110.36 MHz to 2110.54 MHz, the second radio access network node RA-NN2 will apply for example the following equation (8) not having the $L_{\overline{V},MS2}$ = term:

$$\mathbf{w_{MS2}} = \underset{\mathbf{w_{MS2}}}{\arg\max} \frac{P_{MS2}}{M\sigma_n^2 + L_{\overline{S},MS2}} \qquad (8)$$

As can be understood by those skilled in the art, a similar method with additional method steps may be performed if more than one mobile station is located at the edge between the first cooperation cluster C1 and the second cooperation cluster C2 and the second cooperation cluster C2 adapts two or more coordinated multipoint transmission to two or more mobile stations based on channel states of two or more interference channels.

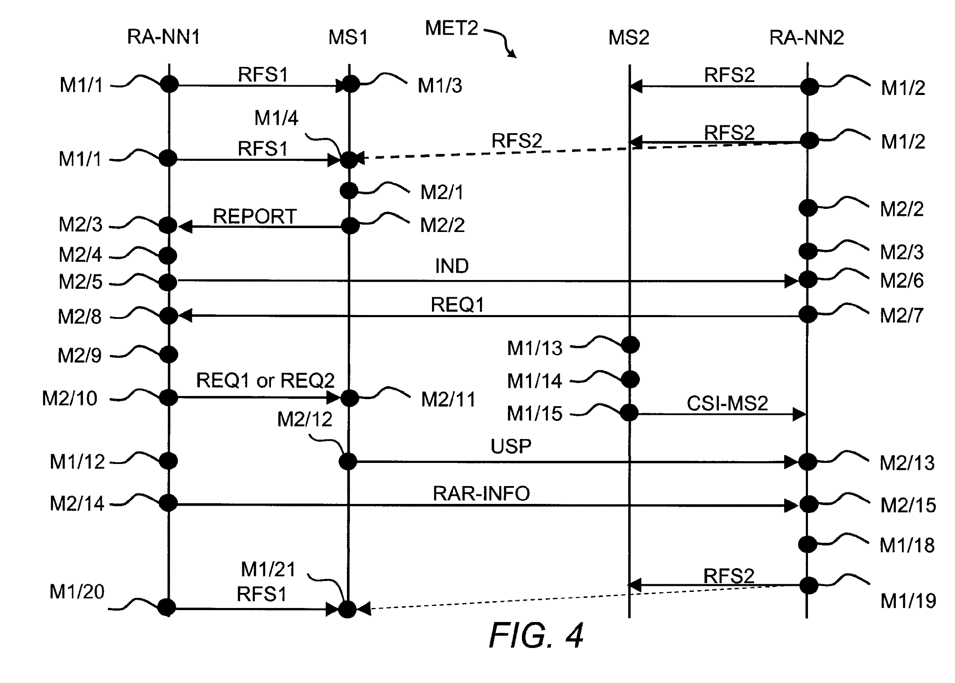

Figure 4 shows schematically a block diagram of a method MET2 for interference reduction according to a further embodiment of the invention. The elements in Figure 4 that correspond to elements of Figure 2 have been designated by same reference numerals.

In addition to the steps M1/1, M1/2, M1/3, M1/4, M1/12, M1/13, M1/14, M1/15, M1/18, M1/19, M1/20 and M1/21 of the method MET1, the method MET2 may further comprises steps M2/1 to M2/12.

The radio communication system RCS may be operated for example with the 3GPP LTE TDD radio access technology with downlink transmission and uplink transmissions in a same frequency range.

In a further step M2/1, the first mobile station MS1 may search for further radio cells such as the third and the fourth radio cell Cell-AA3, Cell-AA4 in a neighborhood of the first and the second radio cell Cell-AA1, Cell-AA2 by measuring pilots and determining for example SINR values (SINR = Signal to Interference plus Noise Ratio) of the further radio cells for potentially serving the first mobile station MS1 with further radio cells of the cooperation cluster or for potentially performing a handover from the first cooperation cluster C1 to the second cooperation cluster C2.

In a next step M2/2, the first mobile station MS1 may transmit the SINR values and cell identifiers of the third and the fourth radio cell Cell-AA3, Cell-AA4 in a report REPORT to the first radio access network node RA-NN1. Preferably, the report REPORT may further comprise information of receiving power levels of the third and the fourth radio cell Cell-AA3, Cell-AA4.

In a next step M2/3, the first radio access network node RA-NN1 receives the report REPORT.

In a further step M2/4, the first radio access network node RA-NN1 analyzes the information of the report REPORT by comparing for example the received SINR values with an SINR threshold value and/or the received receiving power levels with a receiving power threshold value.

In a next step M2/5, if for example the received SINR value of the third radio cell Cell-AA3 has reached the SINR threshold value, the first radio access network node RA-NN1 may transmit an indication IND to the second radio access network node RA-NN2. The indication IND may comprise information, that MS1, served by the first cooperation cluster C1, is in the neighbourhood of the second cooperation cluster C2. Additionally it is indicated that the second radio access network node RA-NN2 is able to measure an uplink pilot sequence, which might be transmitted from the first mobile station MS1. The information may comprise for example a pilot sequence number such as used in 3GPP LTE (e.g. formed by a base sequence and cyclic shift and — if necessary — sequence hopping parameters). Preferably, the information may further comprise a mobile station identification number of the first mobile station MS1.

In a further step M2/6, the second radio access network node RA-NN2 receives the indication IND. The reception of the indication IND may be a hint for the second radio access network node RA-NN2, that the first mobile station MS1 is at the cluster edge between the first and the second cooperation cluster C1, C2.

The second radio access network node RA-NN2 may determine, that an estimation of the interference channel IC between the second cooperating transmission antenna system CTA2 and the first mobile station MS1 is required for reducing the power level of the second radio frequency signals RFS2 in the direction from the second cooperating transmission antenna system CTA2 towards the first mobile station MS1.

In a first alternative, the second radio access network node RA-NN2 may listen to and may measure the uplink pilot sequence of the first mobile station MS1, if the uplink pilot sequence is automatically sent within a first predefined time interval from the first mobile station MS1 or if the uplink pilot sequence is requested from the first radio access network node RA-NN1.

In a second alternative, if the second radio access network node RA-NN2 may receive the uplink pilot sequence not within a second predefined time interval, the second radio access network node RA-NN2 may send in a next step M2/7 a request REQ1 comprising the mobile station identification number to the first radio access network node RA-NN1 for requesting a transmission of uplink sounding pilots at the first mobile station MS1. The request REQ1 may further comprise a timestamp, when to send the uplink sounding pilots.

In a further step M2/8, the request REQ is received at the first radio access network node RA-NN1.

In a next step M2/9, the first radio access network node RA-NN1 may verify, if the transmission of the uplink sounding signals from the first mobile station MS1 can be allowed and may determine, if the transmission is allowed, at what time period (at a time according to the received time stamp or at a different time determined by the first radio access network node RA-NN1) the first mobile station MS1 shall transmit the uplink sounding pilots.

In a further step M2/1 0, the first radio access network node RA-NN1 transmits a request REQ2 for transmitting uplink sounding pilots or forwards the request REQ1 received from the second radio access network node RA-NN2 to the first mobile station MS1. The request REQ1, REQ2 may comprise a timestamp, when to send the uplink sounding pilots.

In a next step M2/11, the first mobile station MS1 receives the request REQ1, REQ2.

In a further step M2/12, the first mobile station MS1 transmits the uplink sounding pilots USP preferably at a time corresponding to the received timestamp.

In a next step M2/13, the second radio access network node RA-NN2 receives and measures the uplink sounding pilots USP. The second radio access network node RA-NN2 measures the channel state of the interference channel IC by determining spatial parameters of the interference channel IC similar to the step M1/6 performed by the first mobile station MS1 during the method MET1.

In a next step M2/14 instead of the step M1/16, the first radio access network node RA-NN1 transmits the information of the one or more radio access resource parameters RAR-INFO to the second radio access network node RA-NN2. More preferably, the information of the one or more radio access resource parameters further comprises a time stamp for the next first coordinated multipoint transmission CMT1.

In a further step M2/15, the second radio access network node RA-NN2 receives the information of the one or more radio access resource parameters RAR-INFO.

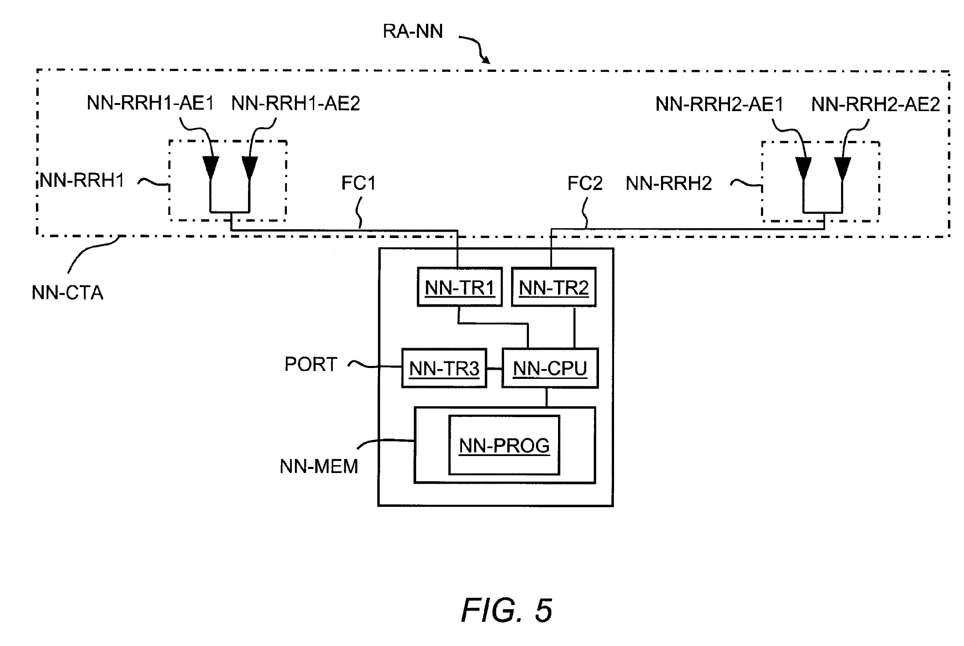

Referring to Figure 5 a radio access network node RA-NN such as the first and the second radio access network RA-NN1, RA-NN2 may comprise a first radio remote head NN-RRH1, a second radio remote head NN-RRH2, a first transceiver NN-TR1, a second transceiver NN-TR2, a third transceiver NN-TR3, an external port PORT, a CPU (CPU = central processing unit) NN-CPU, and a computer readable medium NN-MEM. The CPU NN-CPU is foreseen for executing a computer readable program NN-PROG.

The first radio remote head NN-RRH1 is connected to the first transceiver NN-TR1 by a first feeder cable FC1 and the second radio remote head NN-RRH2 is connected to the second transceiver NN-TR2 by a second feeder cable FC2. The first radio remote head NN-RRH1 may comprise a first antenna element NN-RRH1-AE1 and a second antenna element NN-RRH1-AE2 for a wireless coverage area of a first radio cell. The second radio remote head NN-RRH2 may comprise a first antenna element NN-RRH2-AE1 and a second antenna element NN-RRH2-AE2 for a wireless coverage area of a second radio cell. In further alternatives, the first and the second radio remote head NN-RRH1, NN-RRH2 may comprise four or eight antenna elements.

In even further alternatives, the radio access network node RA-NN may comprise a single radio remote head or more than two radio remote heads.

The first radio remote head RRH1 and the second radio remote head RRH2 are assigned to a combined transmit antenna system CTA providing coverage for a dedicated cooperation cluster. In an alternative, the first radio remote head RRH1 and the second radio remote head RRH2 may be assigned to different combined transmit antenna systems and different cooperation clusters.

The first transceiver NN-TR1 and the first radio remote head NN-RRH1 transmit downlink radio frequency signals such as downlink signalling data and downlink user data to mobile stations. The downlink signalling data may be for example the request for transmitting uplink sounding pilots.

In a backward direction the first transceiver NN-TR1 and the first radio remote head NN-RRH1 receive uplink radio frequency signals such as uplink signalling data and uplink user data from the mobile stations. The uplink signalling data may be for example channel state information CSI-MS1, CSI-MS2 or the uplink sounding pilots UPS.

The third transceiver NN-TR3 is connected to the external port PORT. The external port PORT is used to connect the radio access network node RA-NN to a further radio access network node RA-NN via the backhaul link BL (see Figure 1).

The third transceiver NN-TR3 is used to transmit the channel state information CSI-MS1, CSI-MS2 and/or the information of the one or more radio access resource parameters PAR-INFO to the further radio access network node. The third transceiver NN-TR3 may be further used to transmit the request to the further radio access network node for requesting a transmission of uplink sounding pilots from a mobile station.

In a backward direction the third transceiver NN-TR3 is used to receive the channel state information CSI-MS1, CSI-MS2 and/or the information of the one or more radio access resource parameters PAR-INFO. The third transceiver NN-TR3 may be further used to receive the request for requesting the transmission of uplink sounding pilots from a mobile station. The computer readable medium NN-MEM is foreseen for storing the computer readable program NN-PROG and preferably for storing the predefined channel states and a look up table for radio access network nodes being masters of neighbor cooperation clusters.

The computer readable program NN-PROG is foreseen for executing steps of the methods MET1 and MET2, which will be carried out by the radio access network node RA-NN.

In particular, the computer readable program NN-PROG may assign the first and the second radio remote head RRH1, RRH2 of the radio access network node RA-NN to the cooperating transmission antenna system CTA and may adapt at the cooperating transmission antenna system CTA at least one transmit weight for a coordinated multipoint transmission with radio frequency signals from the cooperating transmission antenna system CTA to a mobile station located in the dedicated cluster based on a channel state of an interference channel of the radio frequency signals between the cooperating transmission antenna system CTA and a further mobile station providing interference to further radio frequency signals received by the further mobile station located in and served by a neighbor cooperation cluster.

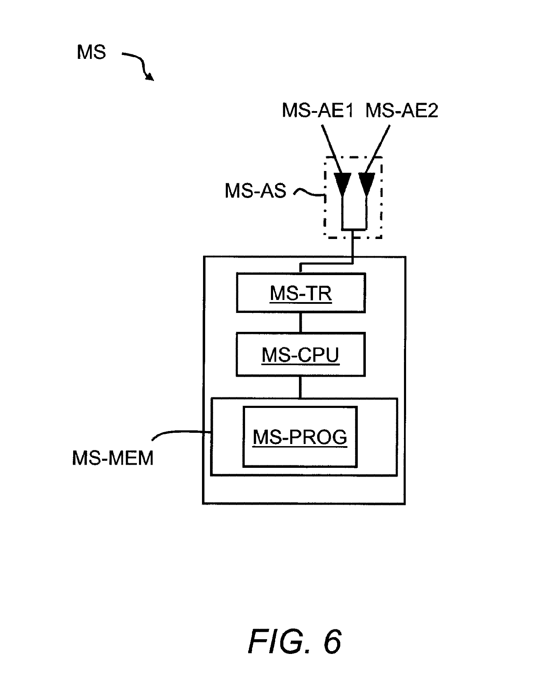

Referring to Figure 6 a mobile station MS such as the first and the second mobile station MS1, MS2 comprises an antenna system MS-AS, a transceiver MS-TR, a CPU (CPU = central processing unit) MS-CPU, and a computer readable medium MS-MEM. The CPU MS-CPU is foreseen for executing a computer readable program MS-PROG.

The antenna system MS-AS comprises a first antenna element MS-AE1 and a second antenna element MS-AE2. Alternatively, the antenna system MS-AS may comprise one antenna element or more than two antenna elements.

The antenna system MS-AS and the transceiver MS-TR receive the downlink radio frequency signals such as the downlink signalling data and the downlink user data. The downlink signalling data may be for example the request REQ1, REQ2 for transmitting uplink sounding pilots.

In a backward direction, the antenna system MS-AS and the transceiver MS-TR transmit the uplink radio frequency signals such as the uplink signalling data and the uplink user data. The uplink signalling data may be for example the channel state information CSI-MS1, CSI-M2 or the uplink sounding pilots USP.

The computer readable medium MS-MEM is foreseen for storing the computer readable program MS-PROG. The computer readable program MS-PROG is foreseen for executing steps of the methods MET1 and MET2, which will be carried out by the mobile station MS.

In particular, the computer readable program MS-PROG may estimate a location of the mobile station MS within a coverage area of a cooperating transmission antenna system serving the mobile station MS with radio frequency signals and may measure a channel state of an interference channel of further radio frequency signals between the mobile station MS and a further cooperating transmission antenna system provided by at least two further antenna arrays, if the location of the mobile station MS is identified at an edge between the coverage area and a further coverage area of the further cooperating transmission antenna system.

**Claims**

1. A method (MET1, MET2) for interference reduction in a radio communication system (RCS), said radio communication system (RCS) comprises a first cooperating transmission antenna system (CTA1) provided by at least two antenna arrays (AA1, AA2) and a second cooperating transmission antenna system (CTA2) provided by at least two further antenna arrays (AA3, AA4), said method (MET1, MET2) comprising the steps of:

   - transmitting (M1/1) from said first cooperating transmission antenna system (CTA1) first radio frequency signals (RFS1) by a first coordinated multipoint transmission (CMT1) to a first mobile station (MS1), and
   - adapting (M1/18) at said second cooperating transmission antenna system (CTA2) at least one transmit weight for a second coordinated multipoint transmission (CMT2) with second radio frequency signals (RFS2) from said second cooperating transmission antenna system (CTA2) to a second mobile station (MS2) based on a channel state of an interference channel (IC) of said second radio frequency signals (RFS2) between said second cooperating transmission antenna system (CTA2) and said first mobile station (MS1) providing interference to said first radio frequency signals (RFS1).

2. Method (MET1, MET2) according to claim 1, wherein said adaptation step is further based on at least one radio access resource parameter for said first coordinated multipoint transmission (CMT1).

3. Method (MET1, MET2) according to claim 2, wherein said first cooperating transmission antenna system (CTA1) is assigned to a first cooperation cluster (C1) and wherein said second cooperating transmission antenna system (CTA2) is assigned to a second cooperation cluster (C2), and wherein said method (MET1, MET2) further comprises the steps of:

- determining (M1/12) by said first cooperation cluster (C1) said at least one radio access resource parameter, and
- transmitting (M1/16, M2/12) from said first cooperation cluster (C1) to said second cooperation cluster (C2) information of said at least one radio access resource parameter (PAR-INFO).

4. Method (MET1, MET2) according to claim 3, wherein said first cooperation cluster (C1) and said second cooperation cluster (C2) are temporally synchronized and wherein said first cooperation cluster (C1) transmits said information of said at least one radio access resource parameter (PAR-INFO) a predefined time before performing said adaptation step at said second cooperation cluster (C2).

5. Method (MET1, MET2) according to any of the preceding claims 3 or 4, wherein said method (MET1, MET2) further comprises the steps of:

- measuring (M1/6, M2/1 0) said channel state of said interference channel (IC) at said first mobile station (MS1) or at said second cooperation cluster (C2),
- transmitting (M1/9) from said first mobile station (MS1) to said first cooperation cluster (C1) information of said channel state (CSI-MS1), if said channel state is measured at said first mobile station (MS1), and
- transmitting (M1/16) from said first cooperation cluster (C1) to said second cooperation cluster (C2) said information of said channel state (CSI-MS1), if said information is received at said first cooperation cluster (C1).

6. Method (MET1) according to claim 5, wherein said method (MET1) further comprises the steps of:

- comparing (M1/7) said channel state of said interference channel (IC) with at least two predefined channel states, and
- selecting (M1/8) one of said at least two predefined channel states with a best match to said measured channel state and wherein said information of said channel state (CSI-MS1) comprises an identification for said one of said at least two predefined channel states with said best match.

7. Method (MET1) according to any of the preceding claims 5 or 6, wherein said information of said channel state (CSI-MS1) further comprises at least one cell ID of said second cooperation cluster (C2).

8. Method (MET1) according to any of the preceding claims 5 or 6, wherein said information of said channel state (CSI-MS1) comprises information for at least two spatial parameters of said interference channel.

9. Method (MET1) according to claim 8, wherein said at least two spatial parameters are a combination of an absolute value and a phase value, a channel vector or a channel matrix.

10. Method (MET1) according to any of the preceding claims 3 to 9, wherein said method (MET1) further comprises the step of estimating (M1/5) at said first mobile station (MS1) a location of said first mobile station (MS1) within a first coverage area (Cell-AA1, Cell-AA2) of said first cooperation cluster (C1) and wherein said channel state of said interference channel (IC) is measured by said first mobile station (MS1), if said location of said first mobile station (MS1) is identified at an edge between said first coverage area (Cell-AA1, Cell-AA2) and a second coverage area (Cell-AA3, Cell-AA4) of said second cooperation cluster (C2).

11. Method (MET1) according to claim 10, wherein said identifying comprises comparing first average signals powers levels received from said first cooperation cluster (C1) with second average signals powers levels received from said second cooperation cluster (C2) and assuming said location of said first mobile station (MS1) at said edge if a difference between said first average signals powers levels and said second average signals powers levels reaches a threshold.

12. Method (MET2) according to any of the preceding claims 3 to 11, wherein said method (MET2) comprises the steps of:

- transmitting (M2/4) a request from said second cooperation cluster (C2) to said first cooperation cluster (C1) for requesting a transmission of uplink sounding signals at said first mobile station (MS1),
- forwarding (M2/7) said request from said first cooperation cluster (C1) to said first mobile station (MS1),
- transmitting (M2/9) uplink sounding signals from said first mobile station (MS1), and
- measuring (M2/10) at said second cooperation cluster (C2) said uplink sounding signals received via said interference channel (IC).

13. A first radio access network node (RA-NN, RA-NN1) for use in a radio communication system (RCS), said first radio access network node (RA-NN, RA-NN1) comprising:

- means (NN-PROG, NN-CPU) for assigning said first radio access network node (RA-NN, RA-NN1) to a cooperating transmission antenna system (NN-CTA, CTA1) provided by at least two antenna arrays (NN-RRH 1, NN-RRH2, AA1, AA2),
- means (NN-TR1, NN-RRH1, NN-TR2, NN-RRH2) for transmitting radio frequency signals (RFS1) by a coordinated multipoint transmission (CMT1) to a mobile station (MS1),
- means (NN-PROG, NN-CPU) for determining at least one radio access resource parameter to be applied for said coordinated multipoint transmission (CMT1), and
- means for transmitting (NN-TR3, PORT) information of said at least one radio access resource parameter (PAR-INFO) to a further radio access network node (RA-NN 1) assigned to a further cooperating transmission antenna system (CTA2) provided by at least two further antenna arrays (AA3, AA4).

14. A second radio access network node (RA-NN, RA-NN2) for use in a radio communication system (RCS), said second radio access network node (RA-NN, RA-NN2) comprising:

- means (NN-PROG, NN-CPU) for assigning said second radio access network node (RA-NN, RA-NN2) to a cooperating transmission antenna system (NN-CTA, CTA2) provided by at least two antenna arrays (NN-RRH1, NN-RRH2, AA3, AA4),
- means (NN-TR1, NN-RRH1, NN-TR2, NN-RRH2) for transmitting radio frequency signals (RFS2) by a coordinated multipoint transmission (CMT2) to a mobile station (MS2), and
- means (NN-PROG, NN-CPU) for adapting at least one transmit weight of said cooperating transmission antenna system (NN-CTA, CTA2) for said coordinated multipoint transmission (CMT2) based on a channel state of an interference channel (IC) of said radio frequency signals (RFS2) between said cooperating transmission antenna system (NN-CTA, CTA2) and a further mobile station (MS1) providing interference to further radio frequency signals (RFS1) received at said further mobile station (MS1) by a further coordinated multipoint transmission (CMT1) from a further cooperating transmission antenna system (CTA1).

15. A mobile station (MS, MS1) for use in a radio communication system (RCS), said mobile station (MS, MS1, MS2) comprising:

- means (MS-AS, MS-TR) for receiving radio frequency signals (RFS1) from a cooperating transmission antenna system (NN-CTA, CTA1) provided by at least two antenna arrays (NN-RRH1, NN-RRH2, AA1, AA2),
- means (MS-TR , MS-PROG, MS-CPU) for measuring a vector-valued or matrix-valued channel state of an interference channel (IC) of further radio frequency signals (RFS2) between a further cooperating transmission antenna system (CTA2) provided by at least two further antenna arrays (AA3, AA4) and said mobile station (MS, MS1) providing interference to said radio frequency signals (RFS1), and
- means (MS-AS, MS-TR) for transmitting vector-valued information or matrix-valued information of said interference channel (IC).

**Amended claims in accordance with Rule 137(2) EPC.**

**1.** A method (MET1, MET2) for interference reduction in a radio communication system (RCS), said radio communication system (RCS) comprises a first cooperating transmission antenna system (CTA1) provided by at least two antenna arrays (AA1, AA2) and a second cooperating transmission antenna system (CTA2) provided by at least two further antenna arrays (AA3, AA4), said first cooperating transmission antenna system (CTA1) is assigned to a first cooperation cluster (C1), said second cooperating transmission antenna system (CTA2) is assigned to a second cooperation cluster (C2), said method (MET1, MET2) comprising the steps of:

- transmitting (M1/1) from said first cooperating transmission antenna system (CTA1) first radio frequency signals (RFS1) by a first coordinated multipoint transmission (CMT1) to a first mobile station (MS1), and
- determining (M1/12) by said first cooperation cluster (C1) at least one radio access resource parameter for a further first coordinated multipoint transmission (CMT1) of first radio frequency signals (RFS1) to said first mobile station (MS1),

**characterized in that** said method (MET1, MET2) further comprises the steps of:

- transmitting (M1/16, M2/12) from said first cooperation cluster (C1) to said second cooperation cluster (C2) information (PAR-INFO) of said at least one radio access resource parameter, and
- adapting (M1/18) at said second cooperating transmission antenna system (CTA2) for said at least one radio access resource parameter at least one transmit weight for a second coordinated multipoint transmission (CMT2) with second radio frequency signals (RFS2) from said second cooperating transmission antenna system (CTA2) to a second mobile station (MS2) based on a channel state of an interference channel (IC) of said second radio frequency signals (RFS2) between said second cooperating transmission antenna system (CTA2) and said first mobile station (MS1) providing interference to said first radio frequency signals (RFS1) and said adaptation step (M1/18) is applied, if said second cooperation cluster (C2) will apply for said second coordinated multipoint transmission (CMT2) to said second mobile station (MS2) a same time period and a same frequency range as determined for said further first coordinated multipoint transmission (CMT1).

**2.** Method (MET1, MET2) according to claim 1, wherein said at least one radio access resource parameter is a spreading code in case of UMTS/WCDMA, a time slot, a subframe or a set of subframes in case of TDD or a subcarrier range and a time slot in case of FDD.

**3.** Method (MET1, MET2) according to claim 1, wherein said first cooperation cluster (C1) and said second cooperation cluster (C2) are temporally synchronized and wherein said first cooperation cluster (C1) transmits said information of said at least one radio access resource parameter (PAR-INFO) a predefined time before performing said adaptation step at said second cooperation cluster (C2).

**4.** Method (MET1, MET2) according to any of the preceding claims 1 or 3, wherein said method (MET1, MET2) further comprises the steps of:

- measuring (M1/6, M2/10) said channel state of said interference channel (IC) at said first mobile station (MS1) or at said second cooperation cluster (C2),
- transmitting (M1/9) from said first mobile station (MS1) to said first cooperation cluster (C1) information of said channel state (CSI-MS1), if said channel state is measured at said first mobile station (MS1), and
- transmitting (M1/16) from said first cooperation cluster (C1) to said second cooperation cluster (C2) said information of said channel state (CSI-MS1), if said information is received at said first cooperation cluster (C1).

**5.** Method (MET1) according to claim 4, wherein said method (MET1) further comprises the steps of:

- comparing (M1/7) said channel state of said interference channel (IC) with at least two predefined channel states, and
- selecting (M1/8) one of said at least two predefined channel states with a best match to said measured channel state and wherein said information of said channel state (CSI-MS1) comprises an identification for said one of said at least two predefined channel states with said best match.

**6.** Method (MET1) according to any of the preceding claims 4 or 5, wherein said information of said channel state (CSI-MS1) further comprises at least one cell ID of said second cooperation cluster (C2) for identifying a radio access network node (RA-NN2) as a master of said second cooperation cluster (C2) by use of a look up table.

**7.** Method (MET1) according to any of the preceding claims 4 or 5, wherein said information of said channel state (CSI-MS1) comprises information for at least two spatial parameters of said interference channel.

**8.** Method (MET1) according to claim 7, wherein said at least two spatial parameters are a combination of an absolute value and a phase value, a channel vector or a channel matrix.

**9.** Method (MET1) according to any of the preceding claims, wherein said method (MET1) further comprises the step of estimating (MI/5) at said first mobile station (MS1) a location of said first mobile station (MS1) within a first coverage area (Cell-AA1, Cell-AA2) of said first cooperation cluster (C1) and wherein said channel state of said interference channel (IC) is measured by said first mobile station (MS1), if said location of said first mobile station (MS1) is identified at an edge between said first coverage area (Cell-AA1, Cell-AA2) and a second coverage area (Cell-AA3, Cell-AA4) of said second cooperation cluster (C2).

**10.** Method (MET1) according to claim 9, wherein said identifying comprises comparing first average signals powers levels received from said first cooperation cluster (C1) with second average signals powers levels received from said second cooperation cluster (C2) and assuming said location of said first mobile station (MS1) at said edge if a difference between said first average signals powers levels and said second average signals powers levels reaches a threshold.

**11.** Method (MET2) according to any of the preceding claims, wherein said method (MET2) comprises the steps of:

- transmitting (M2/4) a request from said second cooperation cluster (C2) to said first cooperation cluster (C1) for requesting a transmission of uplink sounding signals at said first mobile station (MS1),
- forwarding (M2/7) said request from said first cooperation cluster (C1) to said first mobile station (MS1),
- transmitting (M2/9) uplink sounding signals from said first mobile station (MS1), and
- measuring (M2/10) at said second cooperation cluster (C2) said uplink sounding signals received via said interference channel (IC).

**12.** A first radio access network node (RA-NN, RA-NN1) for use in a radio communication system (RCS), said first radio access network node (RA-NN, RA-NN1) comprising:

- means (NN-PROG, NN-CPU) for assigning said first radio access network node (RA-NN, RA-NN1) to a cooperating transmission antenna system (NN-CTA, CTA1) provided by at least two antenna arrays (NN-RRH1, NN-RRH2, AA1, AA2),
- means (NN-TR1, NN-RRH1, NN-TR2, NN-RRH2) for transmitting radio frequency signals (RFS1) by a coordinated multipoint transmission (CMT1) to said mobile station (MS1), and- means (NN-PROG, NN-CPU) for determining at least one radio access resource parameter to be applied for a further coordinated multipoint transmission (CMT1) of said radio frequency signals (RFS1) to said mobile station (MS1), **characterized in that** said first radio access network node (RA-NN, RA-NN1) further comprises means for transmitting (NN-TR3, PORT) information of said at least one radio access resource parameter (PAR-INFO) to a further radio access network node (RA-NN1) assigned to a further cooperating transmission antenna system (CTA2) provided by at least two further antenna arrays (AA3, AA4).

**13.** A second radio access network node (RA-NN, RA-NN2) for use in a radio communication system (RCS), said second radio access network node (RA-NN, RA-NN2) comprising:

- means (NN-PROG, NN-CPU) for assigning said second radio access network node (RA-NN, RA-NN2) to a cooperating transmission antenna system (NN-CTA, CTA2) provided by at least two antenna arrays (NN-RRH1, NN-RRH2, AA3, AA4), and
- means (NN-TR1, NN-RRH1, NN-TR2, NN-RRH2) for transmitting radio frequency signals (RFS2) by a coordinated multipoint transmission (CMT2) from said cooperating transmission antenna system (NN-CTA, CTA2) to a mobile station (MS2),

**characterized in that** said second radio access network node (RA-NN, RA-NN2) further comprises:

- means for receiving (NN-TR3, PORT) information of at least one radio access resource parameter (PAR-INFO) for a further coordinated multipoint transmission (CMT1) of further radio frequency signals (RFS1) to a further mobile station (MS1) from a further cooperating transmission antenna system (CTA1) provided by at least two further antenna arrays (AA1, AA2), and- means (NN-PROG, NN-CPU) for adapting for said at least one radio access resource parameter at least one transmit weight of said cooperating transmission antenna system (NN-CTA, CTA2) for a further coordinated multipoint transmission (CMT2) from said cooperating transmission antenna system (NN-CTA, CTA2) to said mobile station (MS2) based on a channel state of an interference channel (IC) of said radio frequency signals (RFS2) between said cooperating transmission antenna system (NN-CTA, CTA2) and said further mobile station (MS1) providing interference to said further radio frequency signals (RFS1) received at said further mobile station (MS1) by said further coordinated multipoint transmission (CMT1) from saidfurther cooperating transmission antenna system (CTA1) and said at least one transmit weight is adapted, if said second cooperation cluster (C2) will apply for said second coordinated multipoint transmission (CMT2) to said second mobile station (MS2) a same time period and a same frequency range as determined for said further first coordinated multipoint transmission (CMT1).

*FIG. 1*

EP 2 523 360 A1

RA-NN2 MS2 MET1 MS1 RA-NN1

M1/2 M1/2 M1/2 M1/2 M1/17 M1/18 M1/19

RFS2 RFS2 RFS2 RFS2 CSI-MS2 RFS2

RFS2 RFS2 RFS2

M1/13 M1/14 M1/15

CSI-MS1/RAR-INFO

M1/3 M1/9

M1/4 M1/5 M1/6 M1/7 M1/8 M1/21

RFS1 RFS1 RFS1 CSI-MS1 RFS1

M1/1 M1/1 M1/1 M1/10 M1/11 M1/12 M1/16 M1/20

*FIG. 2*

EP 2 523 360 A1

*FIG. 3*

FIG. 4

RA-NN

NN-RRH1-AE1    NN-RRH1-AE2

NN-RRH1

FC1    FC2    NN-RRH2

NN-RRH2-AE1    NN-RRH2-AE2

NN-CTA

NN-TR1    NN-TR2

PORT    NN-TR3    NN-CPU

NN-MEM    NN-PROG

FIG. 5

EP 2 523 360 A1

FIG. 6

Europäisches
Patentamt

European
Patent Office

Office européen
des brevets

# EUROPEAN SEARCH REPORT

**Application Number**

EP 11 30 5580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIRETTE SADEK ET AL: "A Leakage-Based Precoding Scheme for Downlink Multi-User MIMO Channels", IEEE TRANSACTIONS ON WIRELESS COMMUNICATIONS, IEEE SERVICE CENTER, PISCATAWAY, NJ, US, vol. 6, no. 5, 1 May 2007 (2007-05-01), pages 1711-1721, XP011181439, ISSN: 1536-1276, DOI: 10.1109/TWC.2007.360373 * page 1712 - page 1713 * * figure 2 * | 1-12,14 | INV. H04B7/02 H04J11/00 |
| X | SHENGJIE ZHAO ET AL: "An Interference-Aware Precoding Scheme with Other-Cell Interference for Downlink Multi-User MIMO Channel", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-4, XP031770029, ISBN: 978-1-4244-3573-9 * page 2 - page 3 * | 1-12,14 | |
| X | JAI-HOON LEE ET AL: "A multi-user beamforming scheme in MIMO downlink channels for multi-cell networks", CONSUMER ELECTRONICS (ICCE), 2011 IEEE INTERNATIONAL CONFERENCE ON, IEEE, 9 January 2011 (2011-01-09), pages 587-588, XP031921400, DOI: 10.1109/ICCE.2011.5722753 ISBN: 978-1-4244-8711-0 * the whole document * | 1-12,14 | **TECHNICAL FIELDS SEARCHED (IPC)** H04B H04J |

-/--

The present search report has been drawn up for all claims

| Place of search | Date of completion of the search | Examiner |
|---|---|---|
| Munich | 20 January 2012 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 11 30 5580

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MITSUBISHI ELECTRIC: "Leakage-based precoding for CoMP in LTE-A", 3GPP DRAFT; R1-090596, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050338739, [retrieved on 2009-02-03] * page 2 * * page 4 - page 9 * ----- | 1-12,14 | |
| X | MITSUBISHI ELECTRIC: "Leakage-based precoding for CoMP in LTE-A", 3GPP DRAFT; R1-090596, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050338738, [retrieved on 2009-02-03] * page 1 - page 5 * ----- -/-- | 1-12,14 | TECHNICAL FIELDS SEARCHED (IPC) |

The present search report has been drawn up for all claims

| Place of search | Date of completion of the search | Examiner |
|---|---|---|
| Munich | 20 January 2012 | Baltersee, Jens |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...........................................................................
& : member of the same patent family, corresponding
   document

EPO FORM 1503 03.82 (P04C01)

**EUROPEAN SEARCH REPORT**

Application Number

EP 11 30 5580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRIS T K NG ET AL: "Linear Precoding in Cooperative MIMO Cellular Networks with Limited Coordination Clusters", IEEE JOURNAL ON SELECTED AREAS IN COMMUNICATIONS, IEEE SERVICE CENTER, PISCATAWAY, US, vol. 28, no. 9, 1 December 2010 (2010-12-01), pages 1446-1454, XP011336910, ISSN: 0733-8716, DOI: 10.1109/JSAC.2010.101206 * left-hand column, last paragraph and right-hand column, first paragraph; page 1447 * * left-hand column, last paragraph; page 1448 * | 15 | |
| X | US 2010/034151 A1 (ALEXIOU ANGELIKI [GB] ET AL) 11 February 2010 (2010-02-11) * paragraph [0009] * * paragraph [0031] - paragraph [0037] * | 13 | |
| A | RALF IRMER ET AL: "Coordinated multipoint: Concepts, performance, and field trial results", IEEE COMMUNICATIONS MAGAZINE, IEEE SERVICE CENTER, PISCATAWAY, US, vol. 49, no. 2, 1 February 2011 (2011-02-01), pages 102-111, XP011334684, ISSN: 0163-6804, DOI: 10.1109/MCOM.2011.5706317 * right-hand column; page 104 * | 13 | TECHNICAL FIELDS SEARCHED (IPC) |

The present search report has been drawn up for all claims

| Place of search | Date of completion of the search | Examiner |
|---|---|---|
| Munich | 20 January 2012 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 11 30 5580

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 11 30 5580

The Search Division considers that the present European patent application does not comply with the
requirements of unity of invention and relates to several inventions or groups of inventions, namely:

```
1. claims: 1-12, 14

        How to reduce inter-cell interference generated by a radio
        access network node
                        ---

2. claim: 13

        When to reduce inter-cell interference
                        ---

3. claim: 15

        How to provide radio access network nodes with information
        about interference channels
                        ---
```

**ANNEX TO THE EUROPEAN SEARCH REPORT
ON EUROPEAN PATENT APPLICATION NO.**

EP 11 30 5580

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2012

| Patent document cited in search report | Publication date | Patent family member(s) | Publication date |
|---|---|---|---|
| US 2010034151 A1 | 11-02-2010 | EP 2314116 A1 | 27-04-2011 |
| | | KR 20110026012 A | 14-03-2011 |
| | | US 2010034151 A1 | 11-02-2010 |
| | | WO 2010016865 A1 | 11-02-2010 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. GUILLAUD ; D. SLOCK ; R. KNOPP.** A Practical Method for Wireless Channel Reciprocity Exploitation Through Relative Calibration. *ISSPA '05,* 2005
- **QIANG LI ; GEORGHIADES, C.N.** Precoder Quantization for MIMO-OFDM Systems over Frequency Selective Channels. *Mobile and Wireless Communications Summit, 2007,* 01 July 2007, vol. 16th IST, 1-5
- **QIANG LI ; GEORGHIADES, C.N.** Precoder Quantization for MIMO-OFDM Systems over Frequency Selective Channels. *Mobile and Wireless Communications Summit,* 01 July 2007, vol. 16th IST, 1-5

- **T. WILD.** A rake-finger based efficient channel state information feedback compression scheme. *Proceedings of the IEEE VTC spring,* 2010
- **D. AZIZ ; A. AMBROSY ; L. HO ; L. EWE ; M. GRUBER ; H. BAKKER.** Autonomous Neighbor Relation Detection and Handover Optimization in LTE. *Bell Labs Technical Journal,* 2010, vol. 15 (3), 63-84
- **M. SADEK et al.** A leakage-based precoding scheme for downlink multi-user MIMO channels. *Wireless Communications, IEEE Transactions on Wireless Communications,* March 2007, vol. 6 (5), 1711-1721